# EUROPEAN PATENT SPECIFICATION

(11) **EP 2 334 565 B1**
(45) Date of publication and mention of the grant of the patent: **12.03.2014**
(21) Application number: 08876865.0
(22) Date of filing: 17.11.2008
(51) Int. Cl.: B65D 1/34, B65D 21/02, G01N 23/02, G01N 23/04, G01N 23/083, G01N 23/10

(54) **METHOD OF USING A TRAY IN PERFORMING X-RAY INSPECTION OF LIQUID ARTICLES AT A SECURITY CHECKPOINT**
VERFAHREN ZUR VERWENDUNG EINER SCHALE BEI DER DURCHFÜHRUNG EINER RÖNTGENUNTERSUCHUNG VON FLÜSSIGEN ARTIKELN AN EINEM SICHERHEITSKONTROLLPUNKT
PROCÉDÉ D'UTILISATION D'UN PLATEAU POUR EFFECTUER UNE INSPECTION AUX RAYONS X D'ARTICLES LIQUIDES EN UN POINT DE CONTRÔLE DE SÉCURITÉ

(30) Priority: 05.09.2008 US 94743 P; 15.09.2008 US 97060 P
(43) Date of publication of application: 22.06.2011
(73) Proprietor: Optosecurity Inc., Québec, QC G2K 0H1 (CA)
(72) Inventor: ROUX, Michel, Quebec, Quebec G1E 3N2 (CA); BOUCHARD, Michel, R., Saint-Augustin-de-Desmaures Quebec, G3A 2B9 (CA); PERRON, Luc, Charlesbourg Quebec, G2L 1A1 (CA)
(74) Representative: Kurtz, Laurent Charles Edmond
(86) International application number: PCT/CA2008/002025
(87) International publication number: WO 2010/025538

(56) References cited:
- WO-A1-2008/034232
- WO-A1-2008/034232
- WO-A2-2008/036456
- US-A- 3 342 397
- US-A- 3 589 511
- US-A- 4 454 949
- US-A- 4 454 949
- US-A- 4 927 022
- US-A1- 2004 232 092

## Description

### FIELD OF THE INVENTION

The present invention relates to technologies for assessing the threat status of materials by means of penetrating radiation such as X-rays. The invention has numerous applications; in particular it can be used for scanning hand carried baggage at airport security check points.

### BACKGROUND

Some liquid or combinations of liquid and other compounds may cause enough damage to bring down an aircraft. As no reliable technology-based solution currently exists to adequately address this threat, authorities have implemented a ban of most liquids, gels and aerosols in cabin baggage.

As a result, there have been disruptions in operations (e.g., a longer screening process; a change of focus for screeners; additional line-ups), major inconveniences for passengers (as well as potential health hazards for some) and economic concerns (e.g., increased screening costs; lost revenues for airlines and duty free shops; large quantities of confiscated - including hazardous - merchandise to dispose of), and so on.

In light of the above, there is a need to provide a technology-based solution to assess the threat status of liquid products.

### SUMMARY

In accordance with a broad aspect, the present invention provides a method for assessing the threat status of a bottle filled with liquid at a security checkpoint, where the bottle has a generally circular cross-sectional shape and is capable of rolling on a flat surface. The method comprises:
- placing the bottle filled with liquid in a tray;
- introducing the tray and the bottle filled with liquid in a scanning area of an X-ray imaging apparatus;
- restraining the bottle filled with liquid from rolling on the tray while the bottle filled with liquid is in the scanning area;
- performing an X-ray inspection of the bottle filled with liquid while the bottle, filled with liquid is restrained; an
- assessing the threat status of the bottle filled with liquid on the basis of the X-ray inspection.

The features of this method, for which protection is sought, are defined in claim 1 and the claims depending thereon.

In accordance with a specific example of implementation, the method comprises maintaining the bottle filled with liquid, wherein the bottle filled with liquid has a top extremity and a bottom extremity, in a position to induce a meniscus in the bottle filled with liquid to migrate toward one of the extremities while performing the X-ray inspection of the bottle filled with liquid.

In accordance with a specific example of implementation, the bottle filled with liquid has a longitudinal axis. The method comprises positioning the bottle so that the longitudinal axis of the bottle makes an angle with respect to a horizontal plane in the range from about 5 degrees to about 40 degrees. In a more specific example of implementation, method comprises positioning the bottle so that the longitudinal axis of the bottle makes an angle with respect to a horizontal plane in the range from about 5 degrees to about 30 degrees. In a yet a more specific example of implementation, the method comprises positioning the bottle so that the longitudinal axis of the bottle makes an angle with respect to a horizontal plane in the range from about 10 degrees to about 20 degrees. Other aspects and features of the present invention will become apparent to those ordinarily skilled in the art upon review of the following description of specific embodiments of the invention in conjunction with the accompanying Figures.

### BRIEF DESCRIPTION OF THE DRAWINGS

A detailed description of examples of implementation of the present invention is provided hereinbelow with reference to the following drawings, in which:
Figure 1 is a top plan view of a tray according to a non-litniting example of implementation of the invention;
Figure 2 is a perspective view from the bottom of the tray shown in Figure 1;
Figure 3 is a perspective view from the top of the tray shown in Figure 1;
Figure 4 is a side elevation view from a first side of the tray shown in Figure 1;
Figure 5 is a side elevation view from a second side of the tray shown in Figure 1;
Figure 6 is a rear elevation view of the tray shown in Figure 1;
Figure 7 is a front elevation view of the tray shown in Figure 1;
Figure 8 is a diagrammatic representation of an X-ray imaging apparatus in which a tray of the type shown in Figure 1 has been inserted in accordance with a non-limiting example of implementation of the invention;
Figure 9 is a diagrammatic view showing a bottle residing within a recess of a tray of the type shown in Figure 1;
Figure 10 shows a process for using a tray during security screening at a security checkpoint in accordance with a non-limiting example of implementation of the invention;
Figure 11 is a perspective view of a tray according to another non-limiting example of implementation of the invention;
Figure 12 is a diagrammatic representation of a mechanism for restricting the movement of bottles filled with liquid placed in a tray according to a variant;
Figure 13 is a diagrammatic representation of a mechanism for restricting the movement of bottles filled with liquid placed in a tray according to another variant;
Figure 14 is a diagrammatic representation of a mechanism for restricting the movement of bottles filled with liquid placed in a tray according to yet another variant;
Figure 15 is a block diagram of a computing apparatus suitable for use in connection with the X-ray imaging apparatus illustrated in Figure 8 in accordance with a specific. example of implementation of the invention;
Figure 16 is a cutaway side view of a bottle filled with liquid and maintained in an inclined position in accordance with a non-limiting example of implementation of the invention;
Figure 17 is a top plan view of a tray including spacing members according to another variant of the invention;
Figure 18 is a top plan view of a tray having a surface suitable for affixing visual information according to yet another variant of the invention.

In the drawings, embodiments of the invention are illustrated by way of example. It is to be expressly understood that the description and drawings are only for purposes of illustration and as an aid to understanding, and are not intended to be a definition of the limits of the invention.

### DETAILED DESCRIPTION

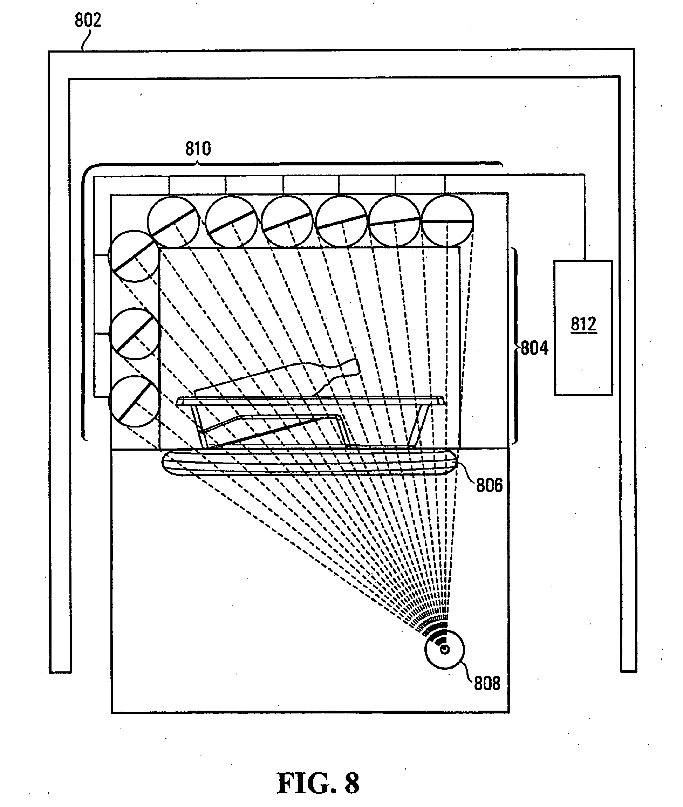

With respect to Figure 8, there is illustrated an X-ray imaging apparatus 802 typical of the type of device used to scan luggage at security checkpoints within airports and other transportation locations. The X-ray imaging apparatus 802 includes a scanning area 804, a conveyor belt 806, an X-ray source 808, an array of X-ray detectors 810 and a processing module 812.

The scanning area 804 (also referred to as scanning tunnel) is defined by an enclosed void between the X-ray source 808 and the array of X-ray detectors 810, in which the objects to be scanned are subjected to penetrating radiation, such as X-rays. The scanning area 804 is typically horizontally oriented and is dimensioned both vertically and horizontally to accommodate the types of objects to be scanned, including articles of hand-carried luggage allowed onboard a commercial aircraft, such as handbags, backpacks, briefcases and shopping bags, among others. The scanning area 804 is centrally traversed by a conveyor belt 806 that is used to convey objects to be scanned both into and out of the scanning area 804 and is described below.

The articles to be scanned can be placed in one or more trays on the conveyor belt 806, as will be discussed in greater detail later.

The conveyor belt 806 is a horizontally-oriented continuous belt of material arranged in an endless loop between two terminal rollers. The belt 806 has an exterior surface on which trays containing the objects to be scanned are placed, as well as an interior surface within which the terminal rollers (as well as other guide rollers and/or supports) lie.

The width of the conveyor belt 806 is sufficient to accommodate the placement of trays within which the objects to be scanned are placed, while its overall length is sufficient to create an endless loop whose length includes:
- A pre-scanning area that lies before the scanning area 804, where the trays containing the objects to be scanned are placed on the belt 806;
- The scanning area 804, where the trays containing the objects being scanned are subjected to penetrating radiation (i.e. X-rays): and
- A post-scanning area that lies after the scanning area 804, where the trays containing the objects that have been scanned emerge after being subjected to penetrating radiation. It is in that area that a user can pick up his or her objects after the security screening operation is competed

It is worth noting that the terminal rollers constituting the end points of the conveyor belt 806 at the pre-scanning and post-scanning areas may be connected to motors (not shown) that allow an operator to move the belt 806 forwards or backwards to displace the tray containing the objects to be scanned between different areas of the X-ray imaging apparatus 802.

With these components, an operator can displace a tray containing objects to be scanned from the pre-scanning area (where the tray is initially placed), through the scanning area 804 (where the tray and its contents are subjected to penetrating radiation) and out to the post scanning area (where the passenger retrieves his/her bags whose contents were scanned and/or where subsequent physical inspection of the contents of the tray is performed).

The X-ray source 808 is the source of penetrating radiation (in this case, X-ray radiation) whose wavelength, frequency and energy is sufficient to penetrate the tray and its contents. The X-ray source 808 is located opposite to the array of X-ray detectors 810 so that X-rays emitted by the source 808 pass through a tray and its contents that are located on the conveyor belt 806 and are detected by the array of X-ray detectors 810 as a result. The array of X-ray detectors 810 detects the penetrating radiation (i.e. X-rays) that was emitted by the X-ray source 808 and that penetrated the contents of the tray and objects to be scanned. The array of X-ray detectors 810 is located opposite to the X-ray source 808 so that X-rays that are emitted by the source 808 pass through a tray and its contents that are located on the conveyor belt 806 and are detected by the array 810.

Generally, the processing module 812 receives the X-ray image data output by the array of X-ray detectors 810 and uses this X-ray image data to generale an X-ray image of the contents being scanned. The generated X-ray image may then be processed and/or analyzed further by human or automated means, as will be shown below.

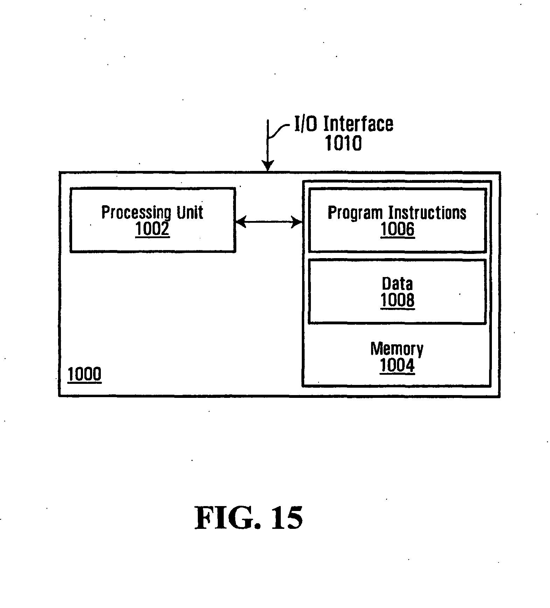

The processing module 812 can be implemented on a general purpose digital computer 1000, of the type depicted in Figure 15, including a processing unit 1002 and a memory 1004 connected by a communication bus. The memory 1004 stores data 1008 and program instructions 1006. The processing unit 1002 is adapted to process the data 1008 and the program instructions 1006 in order to implement the functions described in the specification and depicted in the drawings. The digital computer 1000 may also comprise an I/O interface 1010 for receiving or sending data elements to external devices.

Alternatively, the above-described processing module 812 can be implemented on a dedicated hardware platform where electrical/optical components implement the functions described in the specification and depicted in the drawings. Specific implementations may be realized using ICs, ASICs, DSPs, FPGA, an optical correlator, digital correlator or other suitable hardware platform.

Other alternative implementations of the processing module 812 can be implemented as a combination of dedicated hardware and software. Such an implementation comprises dedicated image processing hardware module and a general purpose computing unit including a CPU and a memory connected by a communication bus.

It will be appreciated that the X-ray imaging apparatus 802 that is depicted in Figure 8 may also be of a distributed nature where the X-ray images of objects being scanned are obtained at one location (or more locations) and transmitted over a network to another entity implementing the functionatity of the processing module 812 described above. Another unit may then transmit a signal for causing a display device (not shown) to display information to the user, such as the X-ray image of the objects being scanned. The display device may be located in the same location where the X-ray images of objects were obtained or in an alternate location.

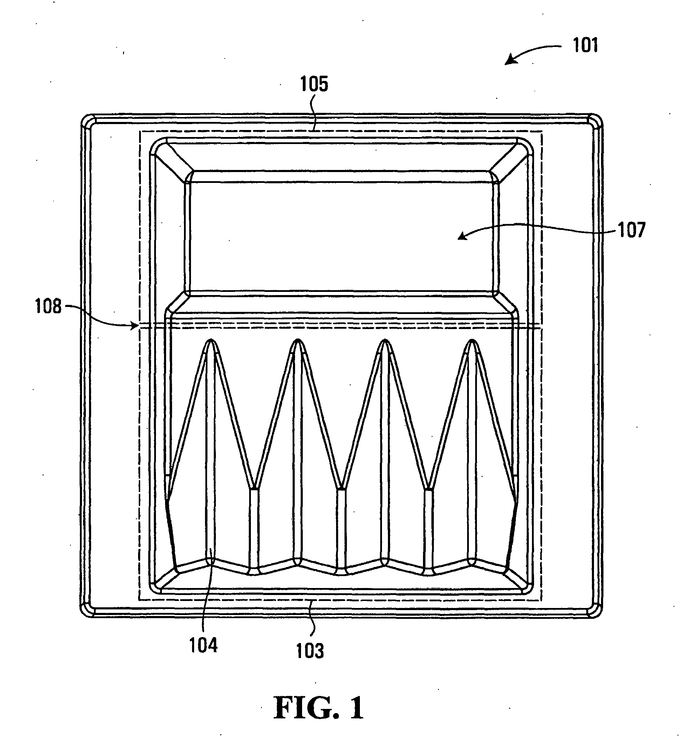

When the set of objects to be scanned in the X-ray imaging apparatus 802 include at least one bottle filled with liquid material a tray, such as the one illustrated in Figure 1 through Figure 7, may be used to hold the bottle filled with liquid.

A "bottle filled with liquid" refers to the combination of a body of liquid material and the container in which the liquid material is contained. For the purposes of this specification, "liquid" refers to a state of matter that is neither gas nor solid and that generally takes the shape of the container in which it is put. This definition would, therefore, encompass materials that are pastes or gels, in addition to substances having a characteristic readiness to flow. For example, toothpaste and other material having the consistency of toothpaste would be considered to fall within the definition of "liquid". Heterogeneous liquids would also be encompassed by such a definition.

In addition, a "bottle" refers to the container in which the liquid is contained. Although the term "bottle" typically refers to a cylindrical container that is used to contain liquids (namely beverages), a bottle in this specification refers to any enclosing structure that is made from a material that is suitable to hold the liquid contained within. Such containers include but are not limited to rigid containers, such as a glass bottle or metal (e.g. Aluminum) containers, as well as semi-rigid containers, such as a bottle made of polyvinyl chloride (PVC), polyethylene or of similar flexible materials.

The bottle may be of any shape including generally eylindrical bottles, such as those used for beverages (e.g. a wine bottle or a can of a soft drink), square bottles used for beverage and non-beverage liquids (e.g. a carton of milk or fruit juice), as well as bottles of any other shapes, such as distinctive pyramidal or star-shaped bottles that may be used to contain cosmetics and perfume.

Each bottle filled with liquid has a transverse dimension and a longitudinal dimension that defines an overall size suitable to be carried in hand-carried luggage that is allowed on board a commercial aircraft. In the case of cylindrical bottles, the transverse dimension is defined by the diameter of the bottle, which may differ between a bottom end and a tapered top end of the bottle. For example, bottles containing wine traditionally have a larger circumference at their bottom end that narrows as the bottle tapers at the top end.

Without intent of being bound by any specific definition, bottles filled with liquid of an overall size suitable for transport in hand-carried luggage allowed onboard a commercial aircraft are those that have a transverse dimension that is less than 5 inches, preferably less than 4 inches, and most preferably less than 3 inches. However, these dimensions are merely guidelines and may vary depending on the rules and regulations enforced for such articles by local, national and international transportation organizations.

A brief description of various categories of bottles filled with liquid is provided below. However, it should be appreciated that the above categories are provided for illustrative purposes only and that other possibilities exist.

One category of bottles filled with liquid include bottles intended for beverages including water, juices, milk products, soft drinks, and alcoholic beverages (e.g. beer or wine). Bottles filled with water typically have a generally circular cross-sectional shape and include various surface features (such as protrusions and corresponding recesses) that are intended to permit the user to positively engage the bottle filled with liquid and assist in maintaining such engagement when the user drinks from the bottle. Additional features include a bottle made entirely of plastic (such as PVC) to provide a light weight, as well as a capping mechanism that allows a user to repeatedly open and close the bottle when they wish to drink from it, such as a screw cap that can be removed and reattached. Bottles filled with water are normally designed to contain water in volumes that may include 100ml or less, in a range from 100 ml to 330ml, in a range from 330ml to 500ml, in a range from 500ml to 750ml, in a range from 750ml to I L and in a range from 1L to 1.5L.

Bottles that are filled with fruit and/or vegetable juice typically share many of the same features as bottles filled with water, such as having a circular cross-sectional shape with protrusions and recesses, as well as the ranges of liquid volumes contained. In some cases, certain bottles filled with juice may be made of a different material (e.g. glass) and/or be capped with a different type of cap, such as a metal screw cap that allows the bottle to be repeatedly removed and reattached.

However, a certain type of bottle that is filled with juice using a process known as "aseptic packaging" may not share the shape and surface characteristics bottles identified above for bottles filled with water. Such bottles (commonly referred to as "'Tetra packs") and their shape may include a square, rectangular or polyhedral (e.g. octahedral) cross-section, as well as a circular cross-section. Moreover, such bottles are made from a typical combination of paper, polyethylene (LDPE). and aluminum with an interior layer of tight polyethylene, and may not provide any surface features (such as protrusions or recesses) found on cylindrical bottles. Such bottles filled with juice are typically not capped with a mechanism that can be removed and reattached, but with an entry seal that may be pierced or peeled to expose the liquid contained within the bottle.

Bottles that are filled with milk products may include those used to contain milk and milk substitutes, baby formula, milk shakes, coffee and/or tea with milk (e.g. "Royal Milk Tea" which is sweetened tea with 10-20% milk, and is commonly found in Asia), as well as other milk-related products. Bottles that are filled with milk products typically are packaged in paper-based cartons that have a square or rectangular cross-section and provide a capping mechanism through an opposing pair of top flaps that can be folded open or shut, and/or a screw top capping mechanism that uses a plastic screw top that can be repeatedly removed and reattached. However, it is worth noting bottles filled with milk products may also have a circular cross-section (such as bottles of prepared milkshakes) and/or may be packaged using the aseptic packaging system identified above, such as for cartons of UHT or HTST milk. Regardless of the packaging system used, bottles filled with milk generally contain volumes of 330ml, 500m), 1L and 2L.

Bottles that are tilled with soft drinks include those for carbonated (e.g. Coke^{™} and Pepsi^{™}) and non-carbonated soft drinks, which may include sports drinks (e.g. Gatorade^{™}) and "energy drinks" (e.g. Red Bull^{™}). Such bottles share many of the same characteristics as the water-fitted and juice-filled bottles mentioned previously, including having a circular cross-section, being made of plastic or glass, having a capping mechanism (e.g. a screw cap) and containing volumes that may range from 330ml to 2L. However, it is worth noting that bottles of soft drinks may include cans, which are sealed cylindrical containers made from a metal (such as Aluminum) and that possess a non-resealable capping mechanism that is integrated with the top surface of the can and is opened through the application of pressure via a lever provided on that top surface. Cans of soft drinks typically contain volumes of 100ml, 240ml, 330ml, 500ml and 750ml.

Bottles that are filled with alcoholic beverages include those used for carbonated beverages (e.g. beer or wine spritzers), as well as those used for non-carbonated beverages, such as wine, liquor and spirits. Such bottles share many of the same characteristics as the bottles filled with liquid that were mentioned earlier, including having a circular cross-section, being made of plastic, metal or glass and having a capping mechanism (such as a wine cork or screw cap) that allows the bottle to be repeatedly resealed. Bottles of alcoholic beverages feature a wider variety of volumes than are found for most other types of beverages, including 50ml bottles (typically provided as samples) through 200ml, 375ml, 500ml, 700ml, 750ml, I L, 1.5L, 1.75L and 2L bottles.

Another category of bottles filled with liquid include those for toothpaste or cosmetic preparations, such as hair shampoos, skin conditioners and nail polish. The bottles may have a circular cross-section throughout the bottle, although it may taper from a larger circumference at a first lower end to a smaller circumference at a second top end. However, such bottles may also have a different cross-section in different sections of the bottle, such as a toothpaste tube that starts at a first lower end with a flat surface and gradually progresses to a circular cross-section at its second top end.

Bottles filled with shampoo or skin conditioner may also be made from a wider variety of materials than those of bottles filled with beverages. For example. bottles filled with cosmetic preparations, typically including metal, plastic, paper and/or glass components, may incorporate different materials in different sections of the container. For example, a bottle containing skin conditioner may have a glass component for containing the conditioner enclosed in a plastic body with a metallic screw cap. In addition, bottles filled with shampoo or skin conditioner may contain a different range of volumes than those for bottles filled with beverages, including 30ml, 50ml, 100ml, 150ml, 200ml, 250ml, 300ml, 500ml, 750ml, and 1 L, volumes.

An example of a tray 101 for containing bottles of the type discussed above in the scanning area of the X-ray imaging apparatus 802 will now be described with reference to Figures through 7. The tray 101 presented in these figures is generally rectangular in shape and is provided on its periphery with a flange that may be used to hold, move and store the tray. The tray 101 can be made of any suitable solid material that does not significantly attenuate X-rays, such as a plastic material that also provides light weight and durability. However, this material is only a preference and is not a requirement of the invention.

Figure 1 shows that the tray 101 is comprised of two (2) areas for receiving articles subjected to penetrating radiation:
- An area 103 containing a recess 104 (or set of recesses) for holding at least one bottle filled with liquid; and
- An area 105 containing a cavity 107 for holding articles other than a bottle filled with liquid.

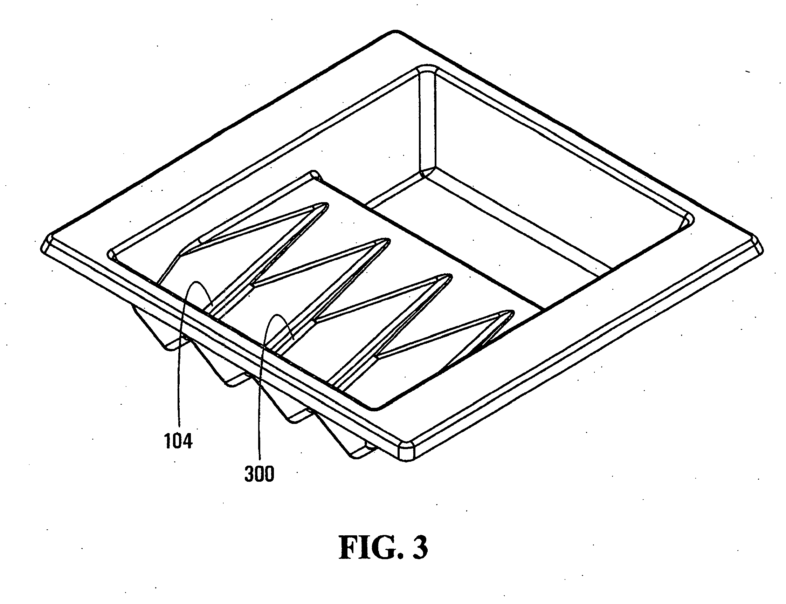

In the example depicted, the area 103 for holding the at least one bottle filled with liquid includes a plurality of bottle receiving recesses 104, which may be seen more accurately in Figure 3. Each recess 104 within this plurality extends side-by-side and is generally parallel with the other recesses 104, although this example is only illustrative of one embodiment of the invention. Alternatively, a single bottle receiving recess 104 may be provided in the case where a single bottle filled with liquid is to be screened.

Each instance of the recess 104 is defined between opposing walls that include flat portions, where the flat portions define a V-shape. The walls in the recess 104 are spaced to engage the bottle filled with liquid on its sides when the bottle filled with liquid is placed in the recess 104, with the opposing walls preventing the bottle filled with liquid from rocking within the recess during the X-ray inspection.

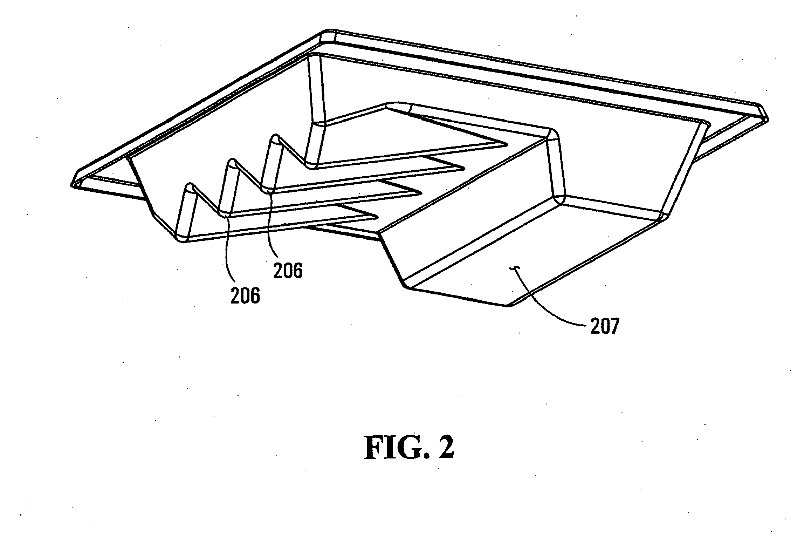

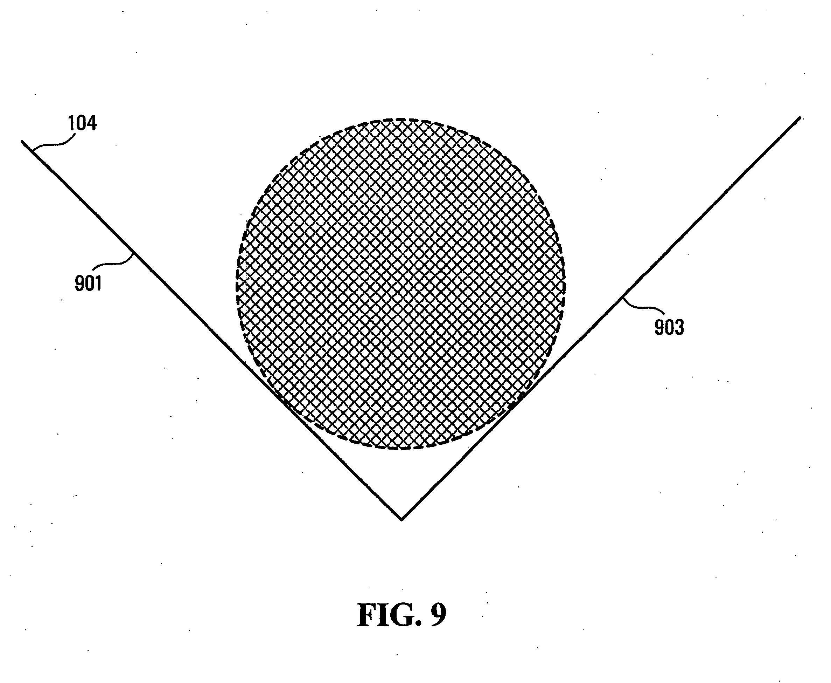

Figure 2 and Figure 3 show how the recess 104 tapers from top to bottom so that when a bottle filled with liquid is placed within it, the bottle will sit against both walls and thus acquire a stable stance. Figure 9 is a diagrammatic view of a bottle having a circular cross-section sitting within a recess 104 to show how the bottle is engaged in a stable stance within it. In this figure, the recess 104 is comprised of two (2) opposing walls: a first opposing wall 901 and a second opposing wall 903 that are angled to form a V-shape at their meeting point. When a bottle filled with liquid is placed within the recess 104, it sits between the opposing walls 901 and 903. The overall weight of the bottle pushes against the opposing walls 901 and 903, resulting in the positive engagement of the bottle with the recess 104 and thus allowing the bottle to acquire a stable stance.

As a result, the bottle filled with liquid is less likely to roll around in the tray 101 during transport via the conveyor belt 806 from the pre-scanning area to the scanning area 804 than if it were to be positioned on a flat surface, such as in a conventional tray and/or on the conveyor belt 806.

In addition, the structure of the recess 104 (i.e. the opposing walls 901 and 903) is also useful to stabilize and secure the bottles filled with liquid as they pass from the pre-scanning area to the scanning area 804 via the conveyor belt 806. The boundary between these two areas is usually demarcated by a curtain comprised of flexible straps. This curtain is typically made from a heavy X-ray blocking material that could engage a bottle filled with liquid and shift it around the tray, or even cause it to fall from the conveyor belt 806.

Generally, it is desirable to maintain the stability of the bottle filled with liquid during the scanning operation in order to improve the accuracy of the threat detection process. As will be described later, the threat detection operation may be automated by providing software that performs an analysis of the generated X-ray image data to determine if the liquid material within the bottle is safe or not. The accuracy of this determination is improved when the bottle filled with liquid remains immovable when the X-ray image is taken. Should the bottle filled with liquid be allowed to roll or otherwise move on the surface of the tray, (especially when the bottle is of a circular cross-sectional shape, which would promote such movement) the X-ray image may be taken while the bottle is in motion. This motion may produce corrupted X-ray image data that may lead to a false identification (i.e. a non-threatening liquid being assessed as a threat and vice versa) or require that another X-ray image be taken before any analysis is performed.

In a specific and non-limiting embodiment, the opposing walls of the recess 104 have flat portions that face each other defining a V-shaped cross section, which is illustrated by the opposing walls 901 and 903 shown in Figure 9. This wall structure accommodates equally well bottles of different shapes and sizes. A bottle filled with liquid simply needs to be put in the recess 104 and it will engage the opposing walls firmly. Smaller bottles will tend to sit deeper in the recess 104 while larger bottles will tend to sit higher in the recess 104.

The dimensions of the wall structure. (particularly the spacing between the opposing walls at the top of the recess 104) determine the range of bottle transverse dimensions that the recess 104 can receive. In a specific and non-limiting example, the opposing walls are spaced by a distance such that a bottle having a maximal transverse dimension of 5 inches or less can fit in the recess 104 in a stable fashion.

Alternative embodiments of the recess 104 defined above may include slightly curved walls instead of straight walls or walls with intermittent flat and curved portions for engagement of a wider variety of bottles with different cross-sections.

As stated earlier, the area containing the recess 103 may include a single recess 104 or a plurality of recesses 104, which is the case illustrated by Figure 1 and Figure 3. When the tray 101 contains a plurality of recesses, each instance of the recess 104 is substantially parallel to the other instances but is separated by a partition 300. In the example shown in Figure 3, the partition 300 is defined by a pair of walls that belong to two adjacent recesses 104.

Figure 2 is a perspective view of the underside of the tray 101. From this perspective, the underside of the recesses 104 appear as projections 206, while the underside of the cavity 107 appears as another projection 207. Figure 2 also shows how the geometric orientation of the recess 104 is such that a bottle received in the recess 104 is inclined with relation to the horizontal plane defined by the exterior surface of the conveyor belt 806 and on which the tray 101 rests during the scanning operation. The purpose of this inclination is to induce the air bubble (also called a meniscus) that is likely to exist within the bottle filled with liquid to migrate to its top (or bottom) end, depending on the orientation in which a given bottle filled with liquid is placed in the recess 104. When the meniscus moves up, the body of liquid that remains below the meniscus within the bottle filled with liquid is easier to analyze and so is more likely to have an accurate threat status assigned to it.

Generally, the threat status of a bottle filled with liquid is based in part on X-ray attenuation information extracted from the X-ray image and an estimated length of a path travelled by X-ray through the liquid in the bottle. To provide the most accurate threat assessment, it is desirable to position the bottle such that the X-rays passing through the body of liquid traverse a path of known length through the liquid. The more accurate the information regarding the length of the path travelled by X-rays through the body of liquid in the bottle, the more accurate the nature of the liquid in the bottle can be derived and therefore a more accurate assessment of its threat status can be made.

Since bottles are typically not flled to their full capacity, there is usually a meniscus that can interfere with the X-ray scanning. If the bottle is placed horizontally on the tray, the meniscus is likely to spread, and (depending on the size of the meniscus) an air layer may be created. The size of such an air layer is determined by the degree to which the bottle has been filled: a full bottle will have a smaller meniscus while a bottle filled partially will have a larger meniscus. In certain cases, the air layer created by the meniscus can extend above the entire body of liquid, which can lead to an inaccurate path length being obtained. For example, due to the presence of an air layer, the path length through the liquid body may be shorter than the distance between the bottle walls (the transverse dimension of the void space within the bottle). By setting a bottle filled with liquid in an inclined position, the meniscus will tend to migrate toward one of the extremities of the bottle.

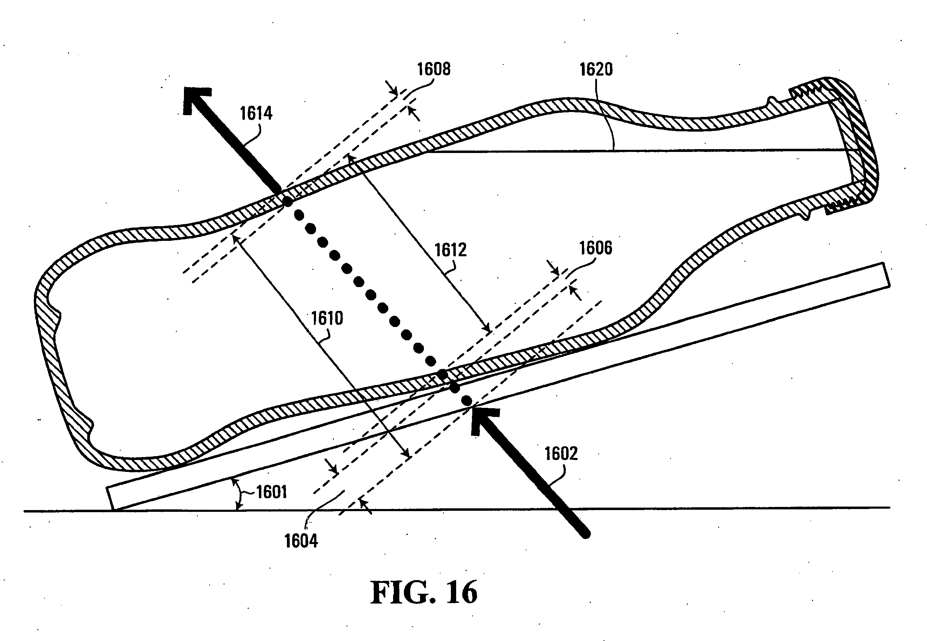

Figure 16 shows a side cutaway view of a bottle filled with liquid in an inclined position. With respect to this Figure, the bottle filled with liquid is generally inclined at an angle 1601 relative to a generally horizontal plane.

Figure 16 also shows the path taken by a ray of penetrating radiation (i.e. an X-ray) through the bottle filled with liquid. The X-ray enters the bottle of liquid at location 1602, travels through the bottle walls and the bottle contents, and emerges from the bottle at location 1614. The angle between the X-ray and the longitudinal axis of the bottle of liquid can be derived using simple trigonometry since the angle 1601 is known and the orientation of the X-ray is also known.

As can be seen, as the X-ray travels from the X-ray source to the X-ray detectors, the X-ray is attenuated by not only the liquid in the bottle but by a supporting structure (such as a tray) holding the bottle and the side walls of the bottle as well. Segment 1610 between the locations 1602 and 1614, herein referred to as the combined segment 1610, is a combination of the following segments:
- segment 1604 through the supporting structure (for example a tray);
- segments 1606 and 1608 through the side walls of the bottle: and
- segment 1612 through the liquid contained in the bottle.

The lengths of segments 1604, 1606 and 1608 may be derived based on the thickness of the supporting structure (tray material) and the bottle side walls, both of which may be known or may he derived using other image analysis techniques known in the art. Similarly, the length of the combined segment 1610 may be obtained based on geometrical information obtained based on the x-ray image of the bottle as well as based on certain geometrical assumptions as to the shape of the bottle (symmetry, shape of the bottom of the bottle, etc...). As a result, the length of the segment 1612 may be determined by subtracting the lengths 1604, 1606 and 1608 from the length of combined segment 1610. The length of the path segment 1612, which in the example shown in figure 16 corresponds to the length of a path taken by X-ray through the liquid in the bottle, can be used with other information, such as X-ray attenuation information obtained from an X-ray image of the bottle holding the liquid, to derive characteristics of the liquid in the bottle including, for example, density and/or the effective atomic number (Z_{eff} number).

It will be appreciated that in using the length of the segment 1612 and attenuation information to derive characteristics of the liquid in the bottle, algorithms generally make the assumptions that the length of segment 1612 corresponds to the length of the path taken by the X-ray passing entirely through the liquid within the bottle. When the bottle filled with liquid is somewhat inclined in a manner similar to that shown in Figure 16, the meniscus 1620 remains towards the top of the bottle and the length of the segment 1612 corresponds to a generally uninterrupted path of the X-ray through the liquid. As will be observed, as angle 1601 becomes smaller (the bottle is laid down closer to the horizontal), the meniscus 1620 travels downward in the bottle and increases in surface area, resulting case where the path taken by the X-ray travels not only through the body of liquid but through the air layer above the meniscus. As a result, the determination of the length of the path taken by the X-ray through the body of liquid, and hence the threat characteristics of the liquid in the bottle, may be subject to certain inaccuracies.

Techniques for the determination of the threat characteristics of the liquid in the bottle may vary from one implementation to the other. Examples of such techniques are described in international patent application no. PCT/CA2007/001658, "Method and Apparatus for Assessing the Characteristics of Liquids", which was tiled by Optosecurity Inc. *et al.* with the Canadian Receiving Office on September 17, 2007 and was published on March 27, 2008 under publication no. WO2008034232.

Returning now to the specific example of implementation of the tray 101 shown in Figure 2, by somewhat inclining the bottle filled with liquid via the recess 104, the meniscus is caused to migrate to one end of the bottle. Below the meniscus, the body of liquid is generally uninterrupted.

The recesses 104 are accordingly designed to maintain the bottles filled with liquid at a certain angle such that the meniscus will move to the elevated end of the bottle, which may be the top end or the bottom end depending on the orientation of the bottle within the recess 104.

In a specific example of implementation, the inclination of the recess 104 is such that a longitudinal axis of a bottle placed within the tray 101 forms an angle to the horizontal plane defined by the conveyor belt 806, which is in the range from about 5° to about 40°, preferably in the range from about 5° to about 30°, and preferably in the range from about 10° to about 20°. In a specific non-limiting practical implementation, the angle is between about 10° and about 15°.

By positioning the bottle inside the tray 101 at a specific angle, the position of the meniscus inside the bottle can be estimated. The optimal angle of inclination of a bottle for the purposes of analysis of the resulting X-ray image will generally depend on the shape of the bottle and the quantity of liquid contained in that bottle. Since in typical security related application, the shape of bottles and the quantity of liquid contained in these bottles will not be known *a priori,* in specific practical implementations the tray will preferably position the bottles at an angle selected to provide the most advantageous positioning for most bottles that are likely to be scanned at the security checkpoint. In a non-limiting example of implementation, the angle will be selected so that the resulting X-ray image of the bottle will likely convey the following:
- visible characteristics of the bottle, such as the shape of the bottom of the bottle that may be used to allow deriving the general shape of the bottle;
- a uniform area of liquid not affected by the meniscus.

In addition, in a specific non-limiting example of implementation, the angle is selected so that the resulting X-ray image of the bottle should conveys the above information irrespective of the orientation of the tray on the conveyor belt of an X-ray screening apparatus.

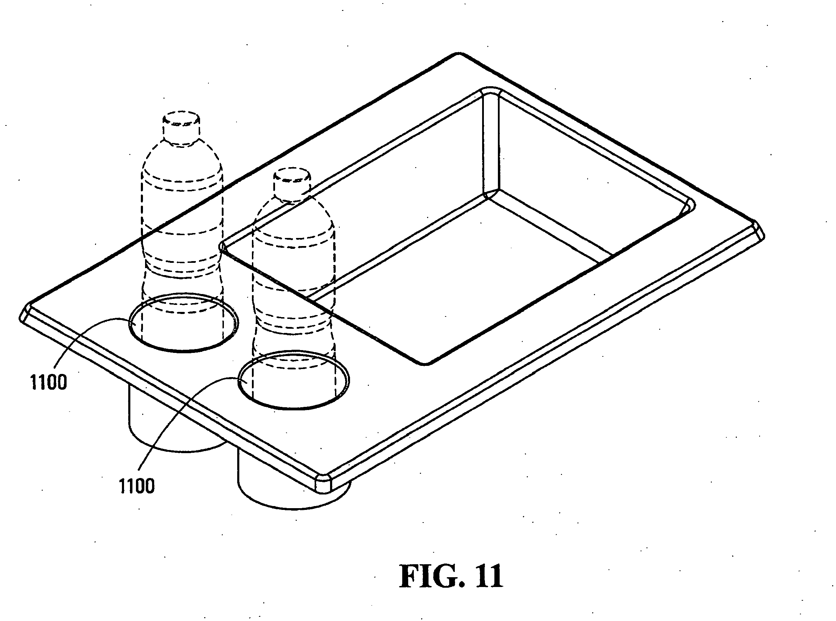

In non-limiting practical implementations, when using a tray to position a full commercial bottle at an angle smaller than 5° and scanning the full commercial bottle with a single view X-ray machine, it was found that frequency the meniscus of the full commercial bottle migrated into the field of vision. It was found that, when using a single view X-ray machine for scanning the bottle, using a tray to position a full commercial bottle at an angle between 10° and 15° and scanning resulted in the operational manipulations and analysis of the resulting X-ray image being facilitated. While the recess(es) 104 illustrated in previous examples set the bottles filled with liquid at a particular incline to the horizontal plane, those skilled in the art will appreciate that other arrangements are possible. In particular, it would be possible to place the bottles filled with liquid in a generally vertical orientation with respect to the horizontal plane defined by the conveyor belt 806, which is best shown by the embodiment depicted in Figure 11. In such an embodiment, the recesses 1100 are both deep and vertically oriented to receive a bottle filled with liquid generally vertically. The transverse dimension of the recess 1100 is selected according to the desired maximal transverse dimension of the bottle to be fitted therein.

Note that the vertical arrangement shown in Figure 11 causes the meniscus to migrate to the upper end of the bottle, as in the case of the previously described embodiment.

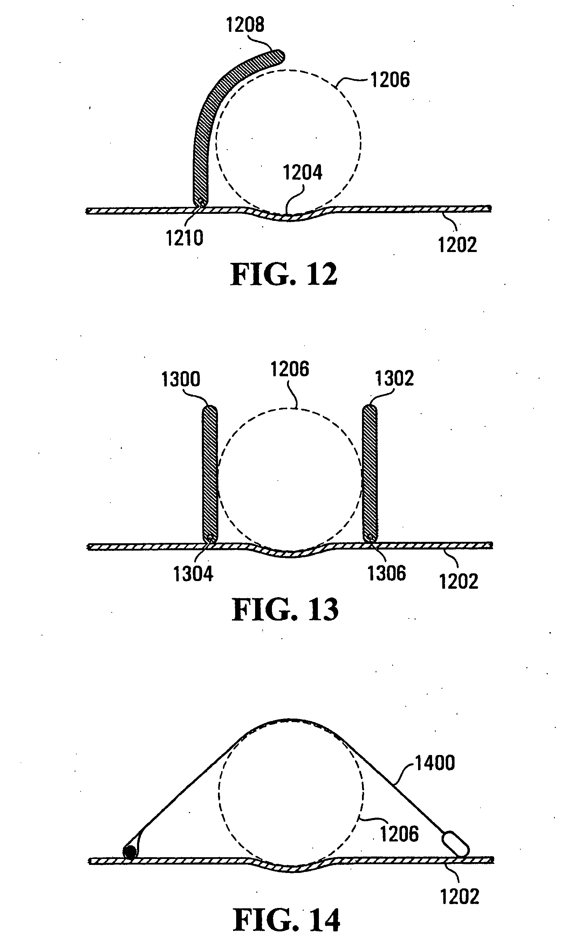

In another alternative embodiment, the recess 104 may include a mechanical locking component operable to secure the bottle filled with liquid in the tray. An example of a tray using such locking component is shown in Figure 12, which shows the tray in cross section. A bottom surface of the tray is shown at 1202. The bottom surface 1202 is generally flat and includes a small depression 1204 designed to receive a bottle filled with liquid. The depression 1204 is shallow and acts primarily as means for locating the bottle filled with liquid in a proper position in the tray. The bottle filled with liquid is shown with dotted lines at 1206 and in this case it is generally circular.

It should be noted that the locking component may be used with or without a recess 104 to secure a bottle filled with liquid to the tray.

The locking component includes an arm 1208 that is curved and which is pivoted at 1210 near the bottom surface of the tray 1202. Although not shown in the drawings, the arm 1208 is engaged by a spring or an equivalent resilient member to pivot in the clockwise direction and thus engage the bottle filed with liquid 1206. The arm 1208 thus clamps the bottle filled with liquid and holds it in the tray such that the bottle acquires and maintains a stable stance.

When the bottle filled with liquid needs to be removed from the tray, the arm 1208 is manually rotated counterclockwise against the resiliency of the spring (not shown) to open the arm 1208 and allow the bottle filled with liquid 1206 to be removed from the bottom surface of the tray 1202.

A possible variant, shown in figure 13, is to provide a locking component including a pair of opposing arms 1300 and 1302 that are pivoted respectively at 1304 and 1306, which engage the bottle filled with liquid on opposite sides. The arms 1304 and 1306 are spring-loaded in order to hold the bottle filled with liquid 1206 in place.

Yet another possible variant of the locking component shown in Figure 14 is to provide a locking component including an adjustable strap 1400 made of a flexible material (such as nylon) that would hold the bottle filled with liquid 1206 against the surface of the tray 1202.

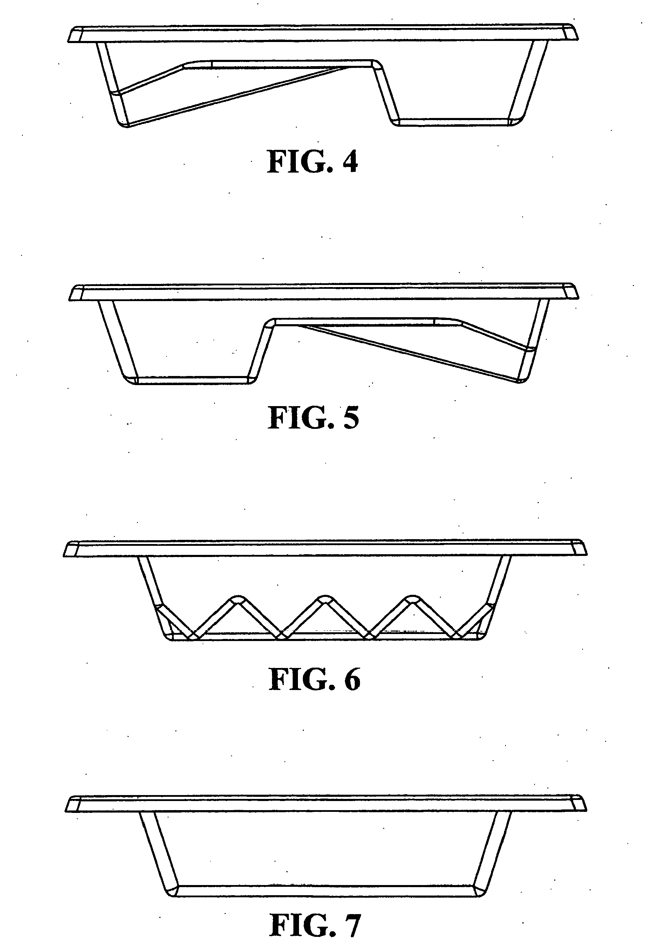

As depicted in Figure 1. Figure 2 and Figure 7, the tray includes a cavity 107 for receiving articles to be subjected to X-ray inspection other than the bottle(s) filled with liquid. The cavity 107 is surrounded by a generally rectangular flange defining a space 105 which is dimensioned to allow an average-sized laptop computer (e.g. a laptop with a 15" screen, such as a 15" Apple^{®} MacBook^{®} Pro with dimensions of 35.7cm wide by 24.3 cm long, or similarly sized device) to be placed in such a manner that the laptop lies substantially flat within space 105. Advantageously, this arrangement allows a single X-ray scan to be used to evaluate the threat status for two common items received at security checkpoints prior to boarding: bottles filled with liquid and other miscellaneous articles, such as laptop computers, cameras, wallets, cell phones, etc.

The cavity 107 and recesses 104 are separated by a partition 108 that is also illustrated in Figure 1. The partition 108 segregates both types of items while keeping them side-by-side to avoid overlap between bottles filled with liquid and non-liquid articles. The separation of the recesses 104 and the cavity 107 that is provided through such an arrangement reduces the likelihood that non-liquid articles in an X-ray image residing within the cavity 107 will obstruct all or part of the body of liquid in a bottle residing within the recess 104. Obstruction is prevented when the majority of the penetrating radiation (i.e. X-rays) that passes through non-liquid articles does not pass through the body of the liquid and vice versa.

By separating bottles filled with liquid from other (non-liquid) articles, the arrangement of the tray 101 allows the X-ray imaging apparatus 802 to provide better X-ray images for analysis and identification and assessment of potential threats. This may improve the efficiency of security checkpoints resulting in reduced waiting times for passengers while ensuring a secure environment for passenger transport.

Once the tray 101 has been scanned and its contents (including bottles filled with liquid and non-liquid articles) removed by the passenger, the tray 101 may be stacked with other like trays. As used here, the term "stackable" refers to the way that the tray 101 may partially fit within and be supported by a like tray below it.

As a result, when the first and second instances of the tray 101 arc stacked, the projections 206 and 207 on the bottom face of the upper tray that register with the recesses 104 and the cavity 107, respectively will line up with and at least partially engages the corresponding recess 104 and the cavity 107 of the lower tray.

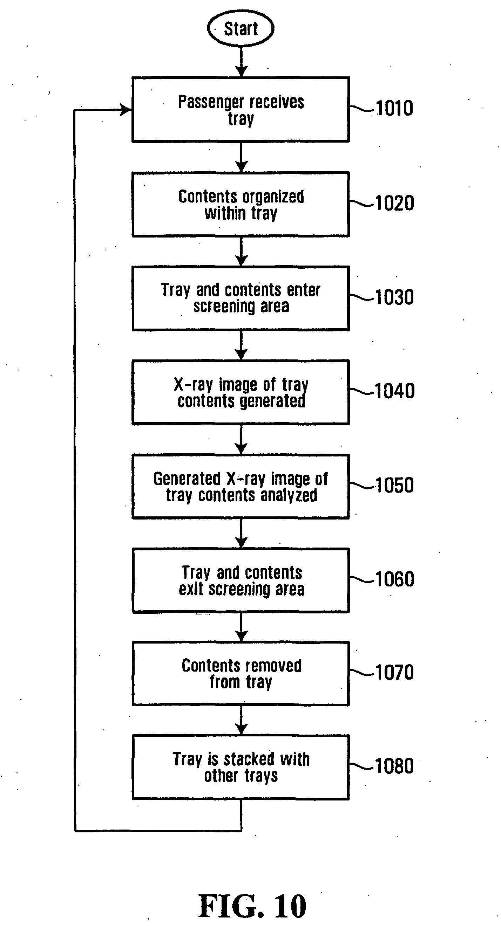

A non-limiting example showing the use of the tray 101 will now be presented in conjunction with the functional block diagram depicted in Figure 10. In this example, assume that a passenger who is at a security checkpoint in an airport and has the following hand-carried luggage with him:
- One (1) 500 ml PVC bottle of water;
- One (1) 750 ml bottle of wine;
- One (1) laptop computer with a 15" screen and power adapter; and
- One (1) backpack that is used to hold the articles listed above.

Further assume that a stack of trays 101 is provided at the security checkpoint.

At step 1010, the passenger arrives at the security checkpoint and receives a tray 101 in the pre-scanning area. In the case where trays are stacked together, the passenger takes the topmost tray 101 from the stack.

At step 1020, the passenger removes the three (3) articles to be scanned (collectively referred to as "tray contents") from the backpack and organizes them within the tray 101 as follows:
- The 500 ml bottle of water is placed within the first recess 104;
- The 750 ml bottle of wine is placed within the second recess 104;
- The third and fourth recesses 104 are left empty; and
- The laptop computer is placed within the area 105.

This arrangement places the passenger's two (2) bottles filled with different types of liquid side-by-side with the non-liquid article (the laptop computer) in the tray 101. Once suitably placed between the opposing walls of their respective recess 104, the bottles are positively inclined at a given angle to the horizontal plane and the meniscus moves to the top of each bottle as a result.

With the tray contents organized, the passenger puts his tray containing the tray contents on the conveyor belt 806 in the pre-scanning area, followed by the (now empty) backpack.

At step 1030, the passenger's tray 101 and tray contents are transported from the pre-scanning area to the scanning area 804. During this movement, the two (2) bottles remain stable in the tray. The laptop computer within area 105 is also protected from shifting or damage that would be otherwise caused by the movement of the conveyor belt 806. The result of this step is the transfer and positioning of the tray and its contents within the screening area 804 of the X-ray screening device 102.

At step 1040, the X-ray source 808 is actuated, causing X-ray beams to penetrate the tray and its contents and be picked up by the array of X-ray detectors 810. The array of X-ray detectors 810 transfers this information to the processing unit 812, which generates an X-ray image of the tray contents that may be processed and analyzed.

At step 1050, the generated X-ray image is processed, which includes analysing the X-ray image of the tray contents to identify potential threats among the tray contents and assign threat statuses to such threats. At this step, software may be used to analyze the portion(s) of the generated X-ray image containing the two (2) bottles filled with liquid (i.e. the bottle of water and the bottle of wine) to determine whether these bottles present any type of threat and if so, determine the threat level associated with each bottle filled with liquid.

Processing unit 812 may implement any suitable method for assessing the characteristics of liquids from the x-ray images of bottles of liquid. Examples of methods that could be used are described in international patent application no. PCT/CA2007/001658, "Method and Apparatus for Assessing the Characteristics of Liquids", which was filed by Optosecurity Inc. *et al.* with the Canadian Receiving Office on September 17, 2007 and was published on March 27, 2008 under publication no. WO2008034232. Amongst others, the above referenced PCT application describes a method that can be implemented as software and that can be used in order to perform an analysis of X-ray image data in order to determine a threat status of the bottles. In particular, the method described makes use of X-ray attenuation information extracted from the X-ray image, which was obtained by subjecting the bottles filled with liquid to x-ray radiation, to determine if the bottles filled with liquid present a threat or not.

Those skilled in the art will understand that the X-ray image of the tray contents generated at step 1040 may also be displayed on a display device (not shown) to allow a human screener to determine whether the non-liquid articles (i.e. the laptop computer) present a security threat. Alternalively, the processing unit 812 may also process this part of the generated X-ray image as well as to assess in an automated fashion whether any of the non-liquid articles of the tray contents presents a threat.

The result of this step is the determination and assessment by the processing unit 812 (and/or human screener) of potential threats within the tray contents that may need further inspection and the communications of the threat result (and/or non-threat result) to the human screener via visual and/or auditory means.

At step 1060, the tray and its contents exit the scanning area 804 and are transported to the post-scanning area via the conveyor belt 806. Like at step 1040, the two (2) bottles filled with liquid, as well as the laptop computer, remain within their respective areas of the tray 101.

At step 1070, the tray contents are removed from the tray 101. If the results of the analysis performed on the tray contents at step 1050 indicate that these articles present no threat, it is likely that the security screener may release the tray 101 and its contents to the passenger and allow him to remove his articles from it. However, if the analysis performed at step 1050 indicates that some potential threat is identified among the tray contents, it is highly probable that security personnel will intervene to inspect the offending article(s) further before releasing the tray 101 to the passenger.

At step 1080, the now empty tray 101 is stacked by the passenger or by security personnel with other like trays in the post-scanning area. In this case, the projections 206 and 207 on the underside of the tray 101 are aligned with the recess(es) 104 and the cavity 107 of other trays in the stack and then the tray 101 is placed at the top of the stack. The stack of trays is then returned to the pre-scanning area for use by other passengers, which starts the operation anew at step 1010.

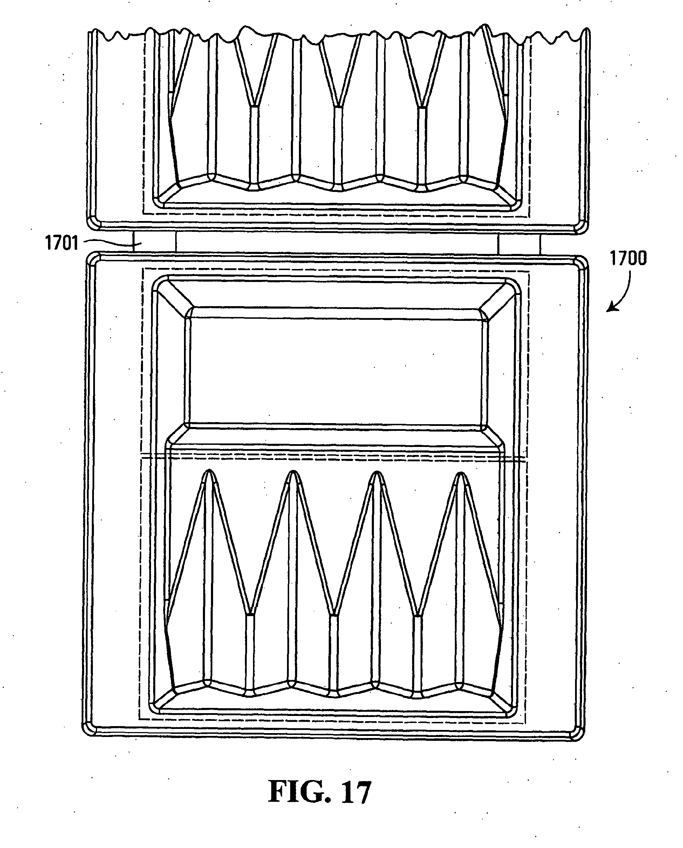

In accordance with a non-limiting variant (depicted in Figure 17), the tray 1700 can include spacing members 1701 positioned on its periphery. In use, when two trays are queued one after the other, the spacing members 1701 of one of the trays come to rest against the other tray so as to keep a certain distance between two consecutive trays as they undergo scanning.

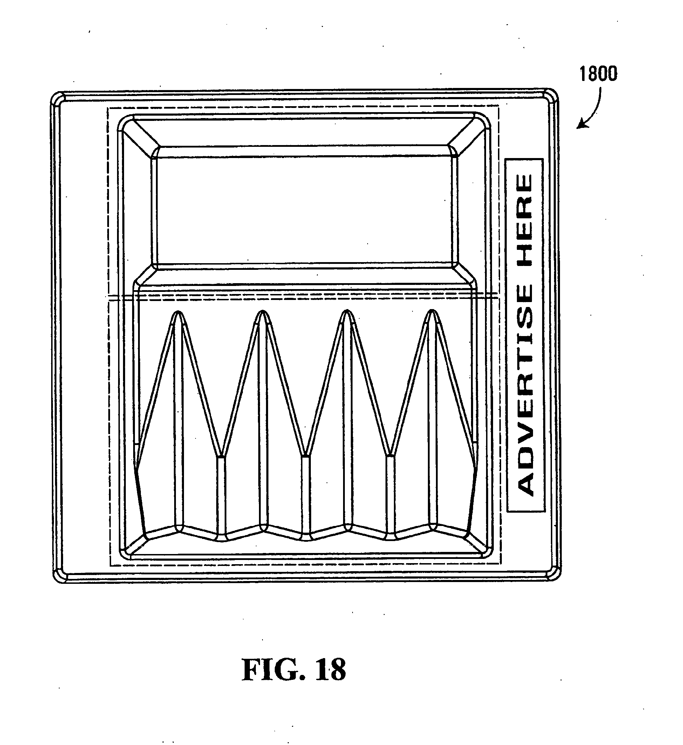

In accordance with another variant shown in Figure 18, the tray 1800 can include an area 1801 providing space to include written material such as for example, printed advertising.

In addition, although the use of the embodiments of the tray described in the present application have been described with reference to single view X-ray imaging apparatus, such as the one shown in figure 8. it is to be appreciated that embodiments of the tray may be used in any suitable type of the X-ray imaging apparatus including multi-view X-ray imaging apparatus.

It will therefore be appreciated that other various modifications will become apparent to those skilled in the art and are within the scope of this invention, which is defined more particularly by the attached claims.

## Claims

1. A method for performing security screening of liquid products at a security checkpoint, each of the liquid products being comprised of a bottle holding a liquid, the method comprising:
- providing an X-ray imaging apparatus (802) having a screening area (804) where items are subjected to penetrating radiation and a conveyor belt (806) displacing items placed thereon through the screening area;
- providing a tray (101) for supporting the liquid products while the liquid products are subjected to X-rays by the X-ray imaging apparatus;
- placing the liquid products on the tray;
- introducing the tray and the liquid products in the scanning area of the X-ray imaging apparatus;
- performing an X-ray inspection of the liquid products;
- assessing if the liquid products present security threats based at least in part on results of the X-ray inspection;
said method being **characterized:**
- **in that** the tray provided has a surface including two or more elongated recesses (104) extending along respective longitudinal axes, each of the elongated recesses being defined between opposing walls (901, 903) spaced to stably engage bottles having transverse dimensions in a range of transverse dimensions, at least two elongated recesses of the two or more elongated recesses extending side by side; and
- **in that** placing the liquid products on the tray includes placing the liquid products In respective elongated recesses of the tray so that the bottles lie generally along the longitudinal axes of the recesses so that, while the tray and the liquid products are being displaced by the conveyor belt through the screening area of the X-ray imaging apparatus, the opposing walls of the elongated recesses prevent the bottles placed in the tray from rocking when the bottles placed in the tray have transverse dimensions within the range of transverse dimensions.

2. A method as defined in claim 1, wherein assessing if the liquid products present security threats includes analyzing the X-ray image data with software, the X-ray image data being generated during the X-ray inspection of the liquid product.

3. A method as defined in claim 2, wherein analyzing the X-ray image data includes extracting from the X-ray image data X-ray attenuation information and processing the attenuation information with software to determine if the liquid products present security threats.

4. A method as defined in any one of claims 1 to 3, wherein the longitudinal axes extends at an angle from the horizontal so that the elongated recesses are at an incline, the incline of the elongated recesses causing menisci formed by the liquids in the bottles to migrate toward an extremity of the bottles.

5. A method as defined in claim 1, wherein the elongated recesses have V-shapes.

## Patentansprüche

1. Verfahren zur Durchführung einer Sicherheitsuntersuchung flüssiger Produkte an einer Sicherheitsprüfstelle, wobei die flüssigen Produkte jeweils eine eine Flüssigkeit enthaltende Flasche umfassen, wobei das Verfahren umfasst:
- Bereitstellen eines Röntgenbildgeräts (802) mit einem Untersuchungsbereich (804), in dem Artikel durchleuchtet werden, und einem Förderband (806), das darauf platzierte Artikel durch den Untersuchungsbereich bewegt;
- Bereitstellen eines Tabletts (101) zum Tragen der flüssigen Produkte, während die flüssigen Produkte durch das Röntgenbildgerät geröntgt werden;
- Platzieren der flüssigen Produkte auf dem Tablett;
- Einbringen des Tabletts und der flüssigen Produkte in den Untersuchungsbereich des Röntgenbildgeräts;
- Durchführen einer Röntgenuntersuchung der flüssigen Produkte;
- Beurteilen, ob die flüssigen Produkte Sicherheitsrisiken aufweisen, zumindest teilweise auf der Grundlage von Ergebnissen der Röntgenuntersuchung;
wobei das Verfahren **dadurch gekennzeichnet ist:**
- **dass** das bereitgestellte Tablett eine Oberfläche mit zwei oder mehr lang gestreckten Aussparungen (104) aufweist, die sich entlang jeweiliger Längsachsen erstrecken, wobei jede der lang gestreckten Aussparungen zwischen gegenüberliegenden Wänden (901, 903) definiert ist, die so beabstandet sind, dass sie Flaschen mit Querabmessungen in einem Bereich von Querabmessungen stabil in Eingriff nehmen, wobei sich wenigstens zwei lang gestreckte Aussparungen der zwei oder mehr lang gestreckten Aussparungen nebeneinander erstrecken; und
- **dass** das Platzieren der flüssigen Produkte auf dem Tablett das Platzieren der flüssigen Produkte in jeweiligen lang gestreckten Aussparungen des Tabletts beinhalt, derart dass die Flaschen im Allgemeinen entlang der Längsachsen der Aussparungen liegen, so dass während des Bewegens des Tabletts und der flüssigen Produkte durch den Untersuchungsbereich des Röntgenbildgeräts durch das Förderband die gegenüberliegenden Wände der lang gestreckten Aussparungen verhindern, dass die auf dem Tablett platzierten Flaschen wackeln, wenn die auf dem Tablett platzierten Flaschen Querabmessungen in dem Bereich von Querabmessungen aufweisen.

2. Verfahren nach Anspruch 1, wobei das Beurteilen, ob die flüssigen Produkte Sicherheitsrisiken aufweisen, das Analysieren der Röntgenbilddaten mit Software beinhaltet, wobei die Röntgenbilddaten während der Röntgenuntersuchung des flüssigen Produkts erzeugt werden.

3. Verfahren nach Anspruch 2, wobei das Analysieren der Röntgenbilddaten das Extrahieren von Röntgenstrahlabschwächungsinformationen aus den Röntgenbilddaten und das Verarbeiten der Abschwächungsinformationen mit Software beinhaltet, um zu bestimmen, ob die flüssigen Produkte Sicherheitsrisiken aufweisen.

4. Verfahren nach einem der Ansprüche 1 bis 3, wobei sich die Längsachsen in einem Winkel von der Horizontalen erstrecken, so dass die lang gestreckten Aussparungen eine Neigung aufweisen, wobei die Neigung der lang gestreckten Aussparungen bewirkt, dass durch die Flüssigkeiten in den Flaschen ausgebildete Menisken in Richtung eines äußersten Endes der Flaschen wandern.

5. Verfahren nach Anspruch 1, wobei die lang gestreckten Aussparungen V-förmig ausgebildet sind.

## Revendications

1. Procédé permettant d'effectuer une inspection de sécurité de produits liquides à un point de contrôle de sécurité, chacun des produits liquides étant composé d'une bouteille contenant un liquide, le procédé comprenant le fait :
de fournir un appareil d'imagerie à rayons X (802) ayant une zone d'inspection (804) où les articles sont soumis à un rayonnement pénétrant et une bande transporteuse (806) déplaçant les articles placés sur celle-ci à travers la zone d'inspection ;
de fournir un plateau (101) pour supporter les produits liquides tandis que les produits liquides sont soumis à des rayons X par l'appareil d'imagerie à rayons X ;
de placer les produits liquides sur le plateau ;
d'introduire le plateau et les produits liquides dans la zone de balayage de l'appareil d'imagerie à rayons X ;
d'exécuter une inspection aux rayons X des produits liquides;
d'évaluer si les produits liquides présentent des menaces pour la sécurité sur la base, au moins en partie, des résultats de l'inspection aux rayons X ;
ledit procédé étant **caractérisé :**
**en ce que** le plateau fourni a une surface comportant deux évidements allongés (104) ou plus s'étendant le long d'axes longitudinaux respectifs, chacun des évidements allongés étant défini entre des parois opposées (901, 903) espacées pour venir en prise de manière stable avec des bouteilles ayant des dimensions transversales se trouvant dans une plage de dimensions transversales, au moins deux évidements allongés des deux évidements allongés ou plus s'étendant côte à côte ; et
**en ce que** le placement des produits liquides sur le plateau comporte le fait de placer les produits liquides dans des évidements allongés respectifs du plateau de sorte que les bouteilles se trouvent globalement le long des axes longitudinaux des évidements de sorte que, tandis que le plateau et les produits liquides sont déplacés par la bande transporteuse à travers la zone d'inspection de l'appareil d'imagerie à rayons X, les parois opposées des évidements allongés empêchent le basculement des bouteilles placées dans le plateau lorsque les bouteilles placées dans le plateau présentent des dimensions transversales se trouvant dans la plage de dimensions transversales.

2. Procédé tel que défini dans la revendication 1, dans lequel le fait d'évaluer si les produits liquides présentent des menaces pour la sécurité comporte le fait d'analyser les données d'image de rayons X avec un logiciel, les données d'image de rayons X étant générées pendant l'inspection aux rayons X du produit liquide.

3. Procédé tel que défini dans la revendication 2, dans lequel l'analyse des données d'image de rayons X comporte le fait d'extraire à partir des données d'image de rayons X des informations d'atténuation de rayons X et de traiter les informations d'atténuation avec un logiciel pour déterminer si les produits liquides présentent des menaces pour la sécurité.

4. Procédé tel que défini dans l'une quelconque des revendications 1 à 3, dans lequel les axes longitudinaux s'étendent à un certain angle par rapport à l'horizontale de sorte que les évidements allongés soient inclinés, l'inclinaison des évidements allongés provoquant la migration des ménisques formés par les liquides dans les bouteilles, vers une extrémité des bouteilles.

5. Procédé tel que défini dans la revendication 1, dans lequel les évidements allongés ont des formes en V.
